# EUROPEAN PATENT APPLICATION

(11) **EP 4 751 890 A1**
(43) Date of publication of application: **03.06.2026**
(21) Application number: 24216767.4
(22) Date of filing: 02.12.2024
(51) Int. Cl.: B29C 65/08, B29L 31/00

(54) **ULTRASONIC SEALING DEVICE, CORRESPONDING SEALING SYSTEM AND PACKAGING MACHINE**

(71) Applicant: Tetra Laval Holdings & Finance S.A., 1009 Pully (CH)
(72) Inventor: LAUSCH, Patrick, 76307 Karlsbad (DE)
(74) Representative: Tetra Pak Patent Attorneys

(57) **Abstract**

A transversal ultrasonic sealing device (1) for a packaging machine configured to produce packages from a multi-layered packaging material, the device (1) comprising:
- a body (3) having opposite lateral walls (3a, 3b);
- a plurality of ultrasonic oscillating elements (2) configured to oscillate at ultrasonic frequencies;
- a clamping element (6) configured to secure the plurality of oscillating elements (2) to the body (3),
wherein the body (3) comprises a coupling region (8) configured to receive the clamping element (6), wherein the coupling region (8) is a reinforced region.

## Description

### TECHNICAL FIELD OF THE INVENTION

The present invention relates to a device and a corresponding system for the sealing in particular the transversal sealing, of packages, in particular composite packages, within a packaging machine for the packaging of pourable products, in particular pourable food products. The invention also relates to a packaging machine that comprises the sealing device and system.

### STATE OF THE ART

As is known, many liquid or pourable food products, such as fruit juice, UHT (ultra-high-temperature treated) milk, wine, tomato sauce, etc., are sold in packages, in particular sealed packages, made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines. For example, in use, such packaging machines may form packages from a web of packaging material advancing through the machine. The web can be folded and sealed longitudinally to form a tube, which is further advanced. Furthermore, the tube is filled with a pourable product, and can be transversally sealed and cut along equally spaced transversal cross sections within a package forming apparatus of the packaging machine during the tube's advancement.

The sealing system comprises a respective sealing device for transversally sealing the tube for obtaining a respective transversal seal portion by locally compressing the tube and heating the respective portions of the layers of heat-seal plastic material. The heating may e.g. occur by sealing devices generating ultrasonic vibrations. In other words, ultrasonic vibrations are generated by an ultrasonic device affecting one or more layers of packaging material, such that heat is generated, and as an effect thereof a sealing can be obtained.

The sealing devices, which heat by means of ultrasound vibrations comprise a sonotrode configured to generate the ultrasonic vibrations and an anvil, which is designed to cooperate with the sonotrode so as to locally compress the tube.

A typical sonotrode comprises a sonotrode head having a sealing surface extending along a longitudinal axis and a vibration control unit connected to the sonotrode head and configured to actuate ultrasonic vibrations of the sonotrode head.

The sonotrode comprises one or more piezoelectric transducers configured to generate ultrasonic vibrations to be coupled into the sonotrode head.

Even though the known sealing devices operate with a high quality and reliability a desire is felt in the sector to further improve the known sealing devices. In particular, a desire is felt to operate with the respective sonotrodes as long as possible and to avoid any unwanted failures. A desire is felt to provide a sealing device and system having an increased lifetime.

In particular, high dynamic and static loads on the piezoelectric elements may lead to a reduced lifetime of the sealing device. A possible solution to reduce the damaging to the piezoelectric elements is to reduce the amplitude of the alternating electric current applied to the piezoelectric elements, but this causes a reduction in the amplitude of the ultrasonic oscillation, which reduces the efficiency of the system. Furthermore, with a reduced preload force, the ceramics can shift.

An example of a known sonotrode can be found in document WO2022207379A1 describing an ultrasonic sealing device. The document addresses a problem of lifetime of the components.

### OBJECT AND SUMMARY OF THE INVENTION

Aim of the present invention is to satisfy the above-mentioned need by providing a device, a system and a packaging machine which make it possible to improve the efficiency of the sealing process in the field of food packaging.

Further aim of the present invention is to satisfy the above-mentioned need by providing a device, a system and a packaging machine which make it possible to improve the lifetime of the sealing device.

It is therefore an object of the present invention to provide in a straightforward and low-cost manner an improved sealing device and system.

It is a further object of the present invention to provide in a straightforward and low-cost manner a packaging machine having an improved sealing device.

### BRIEF DESCRIPTION OF THE DRAWINGS

The advantages and features of the device, the system, and the machine according to the present invention will be clearer from the following description of an exemplary and not limiting embodiment, with reference to the appended drawings, in which:
- figure 1 shows schematic view of a packaging machine having at least one sealing device according to the present invention, with parts removed for clarity
- figure 2 shows a lateral view of a transversal sealing device according to the present invention:
- figure 3 shows a frontal view of the transversal sealing device of figure 1; and
- figure 4 shows a sectional view of the transversal sealing device of figures 1 and 2.

### DETAILED DESCRIPTION OF THE INVENTION

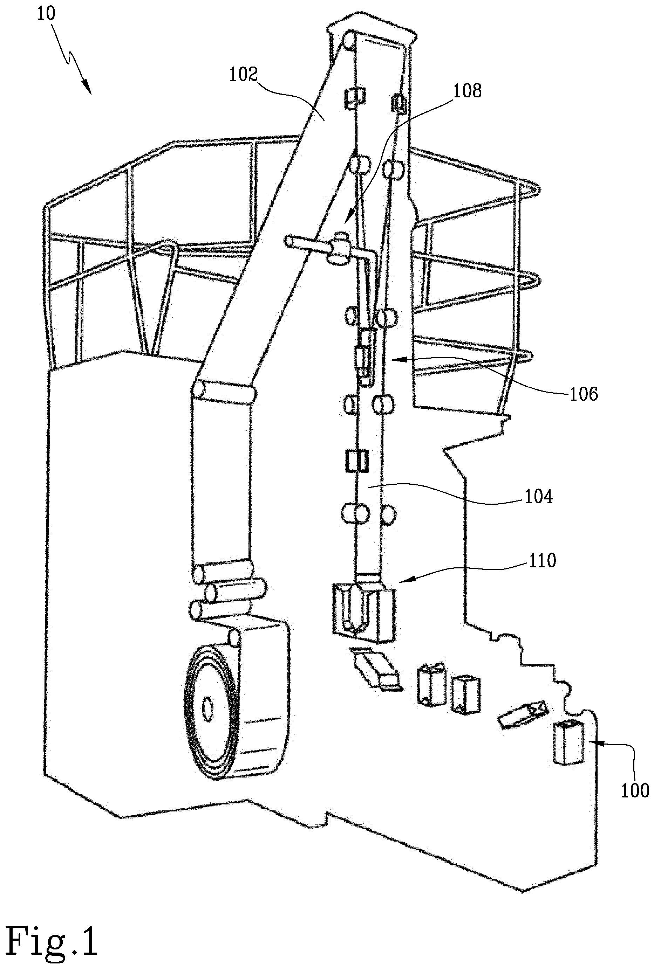

Figure 1 indicates as a whole a packaging machine 10 for producing packages 100, in particular sealed package 100, of a pourable product, in particular a pourable food product, such as (pasteurized) milk, fruit juice, wine, tomato sauce, salt, sugar etc. The packaging machine 10 may be configured to produce packages 100 from a multilayer packaging material, e.g. comprising at least one layer of fibrous material, such as e.g. a paper or cardboard, and at least two layers of heat-seal material, e.g. polyethylene, interposing the layer of fibrous material in between one another. One of these two layers of heat-seal material defining the inner face of package 100 contacting the pourable product.

As exemplified in figure 1, the multilayer packaging material may be provided in the form of a web 102. In particular, web 102 may comprise a plurality of repeated patterns, each pattern defining a respective blank for the formation of one respective package 100. The packaging machine 10 may be configured to produce packages 100 by forming a tube 104 from web 102, longitudinally sealing tube 104, filling tube 104 with the pourable product and to transversally seal and cut tube 104.

A typical package 100 obtained by packaging machine 10 comprises a longitudinal seam portion and a pair of a respective first transversal sealing band and a respective second transversal sealing band, in particular arranged at opposite sides of package 100. In particular, the first transversal sealing band may define a transversal top sealing band and the second transversal sealing band may define a transversal bottom sealing band.

The packaging machine 1 comprises:
- a sterilizing unit (not shown) configured to sterilize the, in use, advancing web 102 at a sterilization station;
- a tube forming and sealing device 106 configured to form tube 104 from the, in use, advancing web 102 and to longitudinally seal tube 104;
- a filling device 108 for continuously filling tube 34 with the pourable product.

The packaging machine 1 comprises a transversal sealing system 110 configured to transversally seal the multi-layered packaging material and optionally to transversally cut the, in use, advancing tube 4 for forming packages 2.

The sealing system 110 comprises at least:
- a sealing device or sonotrode 1 for generating ultrasonic vibrations, in particular for heating/melting the respective portions of the layers of heat-seal material; and
- an anvil for compressing, in particular for locally flat-lying and squeezing the multi-layered packaging material, e.g. in the form of a tube 104, in cooperation with sonotrode or sealing device 1.

The anvil faces the transversal sealing device 1 so as to define a strike portion for ultrasonic vibrations, generated by the sealing device 1, during the sealing operation. During the sealing process, the packaging material is placed between the transversal sealing device 1 and the anvil.

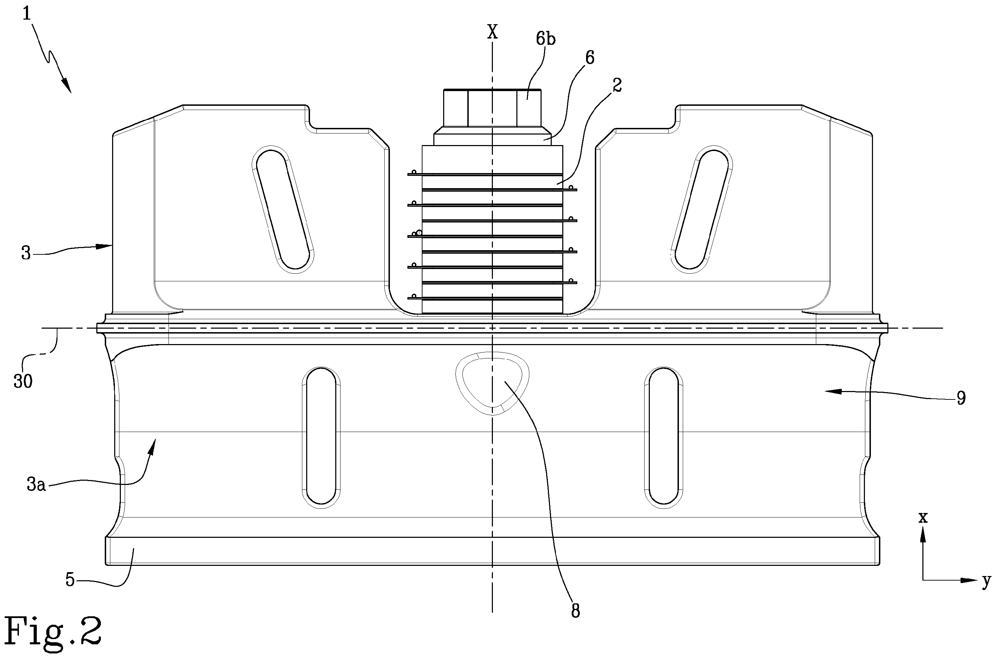

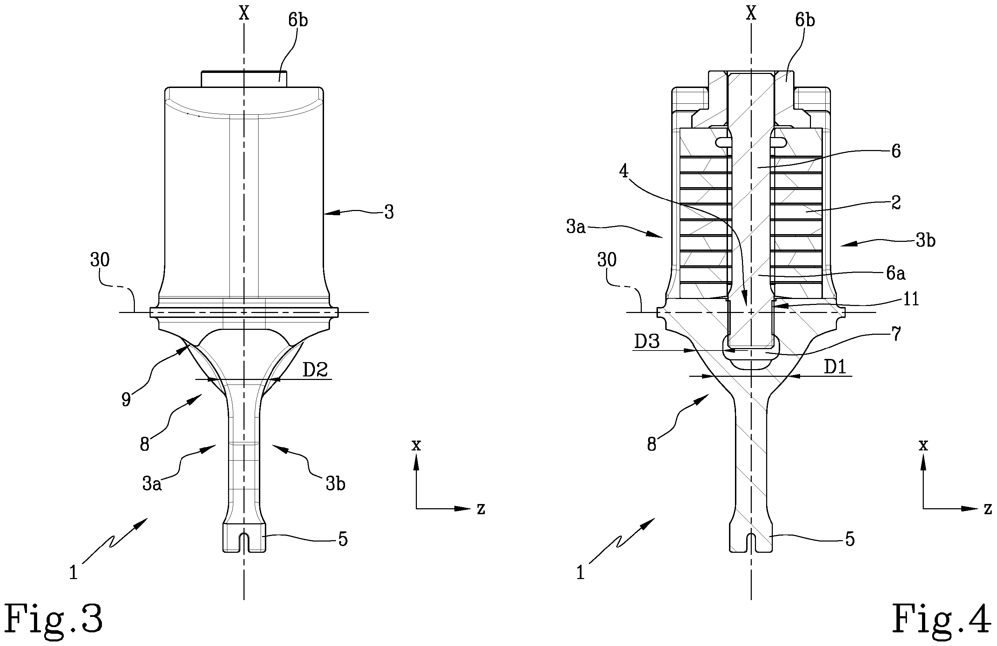

Figures 2 to 4 show a (transversal) sealing device 1 for a packaging machine configured to produce packages from a multi-layered packaging material. In the packaging machine 10 exemplifies in figure 1, the sealing device 1 is configured to transversally squeeze and seal the tube 104. In figures 2 to 4, a three-dimensional Cartesian coordinate system is used, defined by mutually perpendicular first, second and third axes X, Y, Z.

The sealing device 1 comprises a plurality of ultrasonic oscillating elements 2 configured to oscillate at ultrasonic frequencies, e.g. piezoelectric transducers or elements. The sealing device 1 comprises a body 3 having opposite lateral walls 3a, 3b. The sealing device 1 comprises a clamping element or bolt 6 configured to secure the plurality of oscillating elements 2 to the body 3. The clamping element or bolt 6 extends along the first axis X when coupled to the body 3. The first axis X is thus considered as an axis parallel to a vertical line passing through the bolt 6 of the transverse sealing device 1.

The sealing device 1 comprises a tip 5 configured, in use, to contact the multi-layered packaging material. The tip 5 extends along the second axis Y, perpendicular to the first axis X.

To produce ultrasonic vibrations (that is vibration having a frequency higher than 20 Khz), ultrasonic oscillating elements, e.g. piezoelectric elements, can be used. As exemplified in the figures, several piezoelectric elements in the form of disks are mounted one above the other and clamped onto a surface of the body of the device 1 with the aid of a clamping element designed, for example, as a bolt.

For example, when an alternating electric current is applied to a piezoelectric material, the material vibrates at a high frequency, producing a mechanical vibration that is transmitted along the body of the device.

The piezoceramics are mounted using a screw connection. The clamping element is screwed into a threaded hole provided for this purpose and the stack is fixed to the base body. The Applicant has realized that the threaded hole is located in the vibration node of the operating resonance. In addition, a nut is inserted at the upper end of the stack. The screw preload force is applied by tightening the nut. As a result of the static screw preload force and the dynamic load, stresses arise in the material due to the vibration amplitude. The Applicant has further realized that a high expected stress occurs in the area of the thread and the transition radius. As a result, a crack may form in the base body.

The applicant conducted extensive research and concluded that the maximum stress during the activation of the ultrasonic oscillating elements 2 occurs in the area of the bore 4. In fact, as a result of the static and dynamic loading, if the material thickness in the area of maximum stress is too low, the material may form cracks in the body 3.

The body 3 comprises a coupling region 8 configured to receive the clamping element or bolt 6.

The coupling region 8 is a reinforced region. The reinforced coupling region 8 is a region of the sealing device 1 that has been strengthened or augmented through the use of additional materials, modifications to geometry to withstand higher stresses, strains, and/or loads compared to surrounding areas. Advantageously, thanks to the particular geometry and further features that will be discussed in the present description, the coupling region is able to withstand higher stresses and can facilitate an increased lifetime and efficiency of the sealing device and system.

In particular, the reinforced coupling portion 8 may be symmetrical, that is on both sides of the body 3.

Preferably, with respect to one or more planes perpendicular to the first axis X, a distance D1 between the lateral walls 3a, 3b of the body 3 at the coupling region 8 is greater than a distance D2 between the lateral walls 3a, 3b of the body 3 at a region surrounding the coupling region 8. That is, the distance D1 and the distance D2 may lay on axes parallel to the third axis Z, perpendicular to the first and second axis Y. In other words, one or more of the lateral walls 3a, 3b of the body 3 are wider at the coupling region 8 with respect to surrounding areas.

The body 3 may comprise a nodal plane 30. The nodal plane 30 may consist of a region of the body 3 where no nominal vibrations occur. That is, during operation of the sealing device 1, at the nodal plane 30, substantially no vibration is detected. The nodal plane 30 may be perpendicular to the first axis X. With respect to one or more planes parallel to the nodal plane 30, the distance D1 is greater than the distance D2.

As the ultrasonic oscillating elements 2 are attached to the body 3, when they are subjected to alternating electric current, they produce a vibration that propagates from the nodal plane 30 to the tip 5 of the body 3.

The nodal plane 30 may have a first thickness and the tip 5 has a second thickness, smaller than the first thickness.

The body 3 may comprise a tapered portion 9 interposed between the nodal plane 8 and the tip 5. The tapered portion 9 varies its thickness from the nodal plane 8 to the tip 5, in particular a thickness of the tapered portion 9 diminished towards the tip 5.

The coupling region 8 may be at least partially placed at the tapered portion 9. In particular, the coupling region 8 may extend between the nodal plane 30 and the tip 5.

According to one or more embodiments, the coupling region 8 comprises a bore 4. The bore 4 may be a substantially cylindrical cavity configured to receive the clamping element 6. The coupling region 8 may be reinforced in an area surrounding the bore 4. This is advantageously obtained through a (preferably rotationally symmetrical) reinforcement around the bore 4.

Thanks to the above feature, advantageously, any change in the acoustic properties of the oscillating system is very small therefore the impact by this reinforcing portion 8 on the amplitude and frequency of oscillation of the system is negligible.

The bore 4 may have an inner surface defining a cavity. The inner surface may have at least a threaded portion 11 and the clamping element 6 has a thread configured to engage with the threaded portion 11. The clamping element 6 may be in physical contact with the inner surface of the bore 4 only at the threaded portion 11. That is, the clamping element 6 may touch the bore 4 only at the threaded portion 11.

The bore may thus have an end 7 having a bottom surface, the end 7 configured to receive an end of the clamping element 6. The end of the clamping element 6 is positioned at a distance from the bottom surface. That is, the end of the clamping element 6 is free from contact with the inner surface of the bore 4.

The bore 4 may have a flared end 7, e.g. a curved flared end 7. In particular, the bore 4 may be substantially mushroom-shaped, with the end 7 being the head of the mushroom.

The inner surface of the bore 4 may be distanced from the lateral walls 3a, 3b of the body 3. In particular, a third distance D3 between the inner surface of the bore 4 and a respective lateral wall 3a, 3b of the body 3 is non-null.

According to the present description, at least one lateral wall 3a, 3b, preferably both walls 3a, 3b, has a curved convex shape at the coupling region 8. The lateral wall(s) 3a, 3b at the coupling region may protrude from the body 3 with respect to the surrounding area.

The lateral wall 3a, 3b (preferably both walls) at the coupling region 8 has a predetermined first radius of curvature, wherein a center of the first radius of curvature is positioned within the body 3 and/or on an opposite side of the convex lateral wall 3a, 3b with respect to the clamping element 6. That is, the center of the first radius of curvature is positioned on the opposite side of the curved wall with respect to the first axis X.

The tapered portion 9 may have a predefined second radius of curvature, wherein a center of the second radius of curvature is positioned outside of the body 3 and on a same side of the tapered portion 9 with respect to the clamping element 6. That is, the center of the second radius of curvature is positioned on the same side of the tapered wall with respect to the first axis X. The coupling region 8 may be at least partially positioned at the tapered portion 9, in particular at the beginning of the tapered portion 9, even more preferably at the nodal plane 30.

According to an aspect of the present invention, a predetermined ratio exists between the first radius of curvature and the second radius of curvature.

As depicted in the figures, the coupling region 8 at (e.g. on) a surface of the lateral wall 3a, 3b may be substantially triangle shaped. The triangle has a vertex laying on the first axis X and a side extending along the second axis Y.

As can be seen in the figures, the clamping element 6 may comprise a threaded screw 6a and/or a nut 6b. The threaded screw 6a may be coupled with the threaded portion 11 of the bore 4. The oscillating elements 2 may be fixed between the body 3 and the nut 6b of the clamping element 6. By tightening the nut 6b, a preload force is applied to the threaded screw 6a.

While the ultrasonic oscillating elements 2 are electrically activated and the preload force is applied to the threaded screw 6a, the ultrasonic oscillating elements 2 transmit their vibration along the body 3 to the tip 5.

According to an aspect, the bolt 6 is defined by a prisoner threaded screw (to which a nut is coupled, defining a head).

## Claims

1. A transversal ultrasonic sealing device (1) for a packaging machine configured to produce packages from a multi-layered packaging material, the device comprising:
- a body (3) having opposite lateral walls (3a, 3b);
- a plurality of ultrasonic oscillating elements (2) configured to oscillate at ultrasonic frequencies;
- a clamping element (6) configured to secure the plurality of oscillating elements (2) to the body (3),
wherein the body (3) comprises a coupling region (8) configured to receive the clamping element (6), wherein the coupling region (8) is a reinforced region.

2. The sealing device (1) according to the preceding claim, wherein the clamping element (6) extends along a first axis (X) when coupled to the body (3) and wherein, with respect to a plane perpendicular to the first axis (X), a distance (D1) between the lateral walls (3a, 3b) of the body (3) at the coupling region (8) is greater than a distance (D2) between the lateral walls (3a, 3b) of the body (3) at a region surrounding the coupling region (8).

3. The sealing device (1) according to claim 1 or claim 2, wherein the coupling region (8) comprises a bore (4), wherein the coupling region (8) is reinforced in an area surrounding the bore (4).

4. The sealing device (1) according to any of the previous claims, wherein the coupling region (10) comprises a bore (4) having an inner surface defining a cavity, wherein the inner surface has at least a threaded portion (11) and wherein the clamping element (6) comprises a thread configured to engage with the threaded portion (11), wherein the clamping element (6) is in physical contact with the inner surface of the bore (4) only at the threaded portion (11).

5. The sealing device (1) according to any of the previous claims, wherein the coupling region (10) comprises a bore (4) having an inner surface defining a cavity, wherein the bore (4) has a flared end (7), preferably the bore (4) has a curved flared end (7).

6. The sealing device (1) according to any of the previous claims, wherein the coupling region (10) comprises a bore having an inner surface defining a cavity, wherein a distance (D3) between the inner surface of the bore (4) and a respective lateral wall (3a, 3b) of the body (3) is non-null.

7. The sealing device (1) according to any of the previous claims, wherein at least one lateral wall (3a, 3b) has a convex shape at the coupling region (8).

8. The sealing device (1) according to the preceding claim, wherein the at least one lateral wall (3a, 3b) at the coupling region (8) has a predetermined first radius of curvature, a center of the first radius of curvature being positioned within the body (3) and/or on an opposite side of the convex lateral wall (3a, 3b) with respect to the clamping element (6).

9. The sealing device (1) according to any of the previous claims, wherein the body (3) comprises a tapered portion (9), having a predefined second radius of curvature, a center of the second radius of curvature being positioned outside of the body (3) and on a same side of the tapered portion (9) with respect to the clamping element (6), wherein the coupling region (8) is at least partially positioned at the tapered portion (9).

10. The sealing device (1) according to any of the previous claims, wherein the coupling region (8) at a surface of at least one lateral wall (3a, 3b) is substantially triangle shaped, wherein the triangle has a vertex laying on the first axis (X) and a side extending along a second axis (Y), perpendicular to the first axis (X) .

11. The sealing device (1) according to any of the preceding claims, wherein the oscillating elements (2) comprise piezoelectric transducers.

12. The sealing device (1) according to any of the preceding claims, wherein the clamping element (6) comprises a nut (6b), the oscillating elements (2) being fixed between the body (3) and the nut (6b) of the clamping element (6).

13. The sealing device (1) according to any of the preceding claims, wherein:
- at least one lateral wall (3a, 3b) at the coupling region (8) has a predetermined first radius of curvature, and/or
- the body (3) comprises a tapered portion (9) having a predefined second radius of curvature.

14. Sealing system (110) for sealing packages (100) filled with a pourable product produced in a packaging machine (10), the sealing system (110) comprising a sealing device (1) according to any one of the preceding claims, and an anvil facing the transversal sealing device (1) so as to define a strike portion for ultrasonic vibrations, generated by the sealing device (1), during the sealing operation.

15. Packaging machine (10) for producing packages containing pourable food product and comprising at least one sealing system (110) according to the preceding claim.
